Europäisches Patentamt

European Patent Office

Office européen des brevets

(19)

(11) Veröffentlichungsnummer: **0 065 628**
**B1**

## (12) EUROPÄISCHE PATENTSCHRIFT

(45) Veröffentlichungstag der Patentschrift:
**13.02.85**

(21) Anmeldenummer: **82101860.3**

(22) Anmeldetag: **09.03.82**

(51) Int. Cl.⁴: **G 11 B 5/58**, G 11 B 5/02,
G 11 B 21/10

(54) Verfahren und Anordnung zum Kompensieren von Signaleinbrüchen in von magnetischen Aufzeichnungsträgern gelesenen Signalen.

(30) Priorität: **22.05.81 DE 3120327**

(43) Veröffentlichungstag der Anmeldung:
**01.12.82 Patentblatt 82/48**

(45) Bekanntmachung des Hinweises auf die Patenterteilung:
**13.02.85 Patentblatt 85/7**

(84) Benannte Vertragsstaaten:
**DE FR GB**

(56) Entgegenhaltungen:
DE - A - 2 460 083
DE - B - 1 147 261
US - A - 3 305 731

IBM TECHNICAL DISCLOSURE BULLETIN, Band 21, Nr. 3, August 1978, Seiten 932-933, New York (USA); G.W. BROCK et al.: "Detecting erroneous servo in record storage apparatus"
IBM TECHNICAL DISCLOSURE BULLETIN, Band 22, Nr. 8A, Januar 1980, Seiten 3127-3130, New York (USA); G.W. BROCK et al.: "Recording position signals on record disks"

(73) Patentinhaber: **IBM DEUTSCHLAND GMBH, Pascalstrasse 100, D-7000 Stuttgart 80 (DE)**

(84) Benannte Vertragsstaaten: **DE**

(73) Patentinhaber: **International Business Machines Corporation, Old Orchard Road, Armonk, N.Y. 10504 (US)**

(84) Benannte Vertragsstaaten: **FR GB**

(72) Erfinder: **Schaller, Karl Heinz, Dipl.-Ing., Eifelstrasse 6, D-7033 Herrenberg 1 (DE)**
Erfinder: **Zimmermann, Volker, Dr.-Ing., Banater Strasse 51, D-7032 Sindelfingen (DE)**

(74) Vertreter: **Gaugel, Heinz, Dipl.-Ing. et al, Schönaicher Strasse 220, D-7030 Böblingen (DE)**

## Beschreibung

Die Erfindung betrifft ein Verfahren zum Kompensieren von Signaleinbrüchen in von magnetischen Aufzeichnungsträgern gelesenen Signalen, insbesondere Einbrüche in Lesesignale von Servosignalen zur Steuerung der Spurfolge von Magnetköpfen sowie eine Anordnung zur Durchführung des Verfahrens.

Signaleinbrüche in von magnetischen Aufzeichnungsträgern gelesenen Signalen treten immer dann auf, wenn in der magnetischen Schicht Defekte vorhanden sind, genau an der Stelle, an der das zu lesende Signal aufgezeichnet ist. Ob die Fehler in der magnetischen Schicht von Anfang an, durch Kratzer im Laufe des Betriebes, beispielsweise durch Berührung mit dem Magnetkopf, oder auf andere Weise entstanden sind, spielt dabei keine Rolle. Entscheidend ist, daß während des Betriebes solche Fehler zusätzlich auftreten können. Es ist klar, daß Fehler in dem gelesenen Signal zu Lesefehlern mit erheblichen Konsequenzen führen.

Stellen die gelesenen Signale beispielsweise Servosignale dar, die zu der Spurfolgeregelung von Magnetköpfen gehören, dann können fehlerhafte Lesesignale zu falschen Positionssignalen und folglich zu einer falschen Nachführung des Magnetkopfes führen. So ist beispielsweise auf der DE-AS 14 24 516 bzw. der US-PS 31 85 972 eine Spurfolgeregelung für einen Magnetkopf durch Servosignale bekannt, bei der die Servosignale an Servomarkierungen abgefühlt werden, welche in Servosektoren der Aufzeichnungsspuren aufgezeichnet sind. Die Servosektoren sind in gleichen Winkelabständen zwischen den Datensektoren der Magnetplatte angeordnet. Die Abtastung der Daten- und Servosektoren erfolgt mit Hilfe eines Magnetkopfes, der durch die Zustellvorrichtung auf die Spuradresse einer Aufzeichnungsspur eingestellt wird. Zur Einstellung auf die Spuradresse und zur Einhaltung dieser Spuradresse, d. h., daß der Kopf seiner einmal eingestellten Spur folgt, wird die Servoschaltung durch eine Umschalteinrichtung gesteuert, die mit dem Plattenumlauf synchronisiert ist. Dadurch werden die bei der Abtastung der Servosektoren durch den Magnetkopf gelesenen Servosignale in vorgegebenen Zeitabschnitten der Servoschaltung zugeführt und von dieser entsprechend ausgewertet und zur Regelung ausgenutzt.

Es ist weiterhin aus der DE-OS 22 02 747 bzw. der US-PS 36 91 543 bekannt, das Magnetisierungsmuster einer Servospur auf zwei nebeneinanderliegenden Spurbereichen zu bilden, die an parallel angeordneten Punkten positive Magnetisierungswechsel aufweisen. In den Abständen zwischen diesen positiven Magnetisierungswechseln enthält jeder Spurbereich einen negativen Magnetisierungswechsel, der zu den negativen Magnetisierungswechseln der benachbarten Spuren in Spurrichtung in einem Abstand versetzt angeordnet ist. Aus den positiven Magnetisierungswechseln der Servospuren werden die Taktsignale abgeleitet. Aus den in Abständen angeordneten negativen Magnetisierungswechseln werden die Servosignale für die Spurmittenführung des Magnetkopfs abgeleitet.

Aus einem Artikel im IBM Technical Disclosure Bulletin, Vol. 13, Nr. 11, April 1971, Seite 3505 ist es bekannt, Defekte, die im Bereich der Servosignale auftreten, dadurch zu kompensieren, daß die mit Defekten behafteten Servosignalmarkierungen in ihrer Länge vergrößert werden, um somit die Beeinträchtigung in ihrem Energiegehalt wieder auszugleichen und auf den früheren Stand zu bringen. Dies erfordert jedoch in der Praxis, daß nach Beschreiben eines magnetischen Aufzeichnungsträgers die Servomarkierungen genau gelesen und geprüft werden und entsprechend modifiziert erneut geschrieben werden müssen, wenn Defekte festgestellt worden sind. Dies ist zum einen ein erheblicher Aufwand und zum anderen sind mit Hilfe dieser Lösung Defekte nicht zu beheben, die erst während des Betriebes des magnetischen Aufzeichnungsträgers, beispielsweise durch Verkratzen der Oberfläche desselben, auftreten.

Aus einem Artikel in dem IBM Technical Disclosure Bulletin, Vol. 22, Nr. 8A, Januar 1980, auf Seite 3127 bis 3130 ist im Zusammenhang mit der genauen Aufzeichnung von Servosignalen eine Methode beschrieben, durch die nach Fabrikation auftretende Oberflächenfehler beim Aufzeichnen der Servosignale festgestellt und durch entsprechende Änderung der Servosignalaufzeichnungen eliminiert werden. Bei diesem Verfahren wird die Servoaufzeichnung einer Spur aus dem Vergleich der Servoaufzeichnungen in den wenigen vorher aufgezeichneten Servosignalen benachbarter Spuren orientiert. Dies betrifft sowohl den Abstand der Spuren untereinander als auch die Signalstärke. Es lassen sich mit diesem bekannten Verfahren jedoch wiederum nur solche Fehler in den Servosignalen eliminieren, allerdings auch hier mit erheblichem Aufwand, die bereits vor dem Aufzeichnen der Servosignale aufgetreten sind. Fehler, die nachher auftreten, sind dadurch nicht auszugleichen.

Zur Kompensation von Fehlstellen bzw. zur Vermeidung des Schreibens von Signalen auf defekte Stellen magnetischer Aufzeichnungsträger ist es allgemein bekannt, wie dies beispielsweise im IBM Technical Disclosure Bulletin, Vol. 22, Nr. 5, Oktober 1979, auf Seite 2091 beschrieben ist, in den Datenaufzeichnungen auch Aufzeichnungen darüber unterzubringen, welche Bereiche des Aufzeichnungsträgers nicht beschrieben werden können. Auch hier ist es jedoch wieder erforderlich, daß die Fehlstellen in einem besonderen Suchlauf vor Benutzung als Datenträger festgestellt und festgehalten werden. Fehlstellen, die erst im Betrieb auftreten oder entstehen, können nach wie vor zu Fehlern führen.

Hier will die Erfindung Abhilfe schaffen. Die Erfindung, wie sie in den Ansprüchen gekennzeichnet ist, löst die Aufgabe, Signaleinbrüche in von magnetischen Aufzeichnungsträgern gelesenen Signalen, insbesondere Einbrüche in Lesesignale von Servosignalen, zu kompensieren bzw. weitgehend unschädlich zu machen, so daß keine Fehlinformationen über die Signale auftreten bzw. die Signale kaum von ihrer richtigen Wiedergabe entfernt sind.

Die wesentlichen Vorteile, die durch die Erfindung erzielt werden, sind darin zu sehen, daß Signaleinbrüche, die aufgrund von Fehlern während des Betriebes entstehen, beispielsweise bei durch Kopfberührung entstehende Kratzer, nicht zu Fehlsignalen führen, weil sie in ihrer Wirkung entweder voll kompensiert oder weitgehend gemindert werden. Dies läßt sich mit dem Verfahren und der Vorrichtung gemäß der Erfindung bei geringem technischem Aufwand erzielen.

Im folgenden wird die Erfindung anhand der lediglich einen möglichen Ausführungsweg darstellenden Zeichnung näher erläutert. In dieser Zeichnung zeigt:

Fig. 1 verschiedene Signalkurven in Abhängigkeit von der Zeit bei zwei typischen Fällen von Signaleinbrüchen, die durch das Verfahren gemäß der Erfindung kompensiert werden und

Fig. 2 in schematischer Weise ein Blockschaltbild zur Durchführung des Verfahrens gemäß der Erfindung.

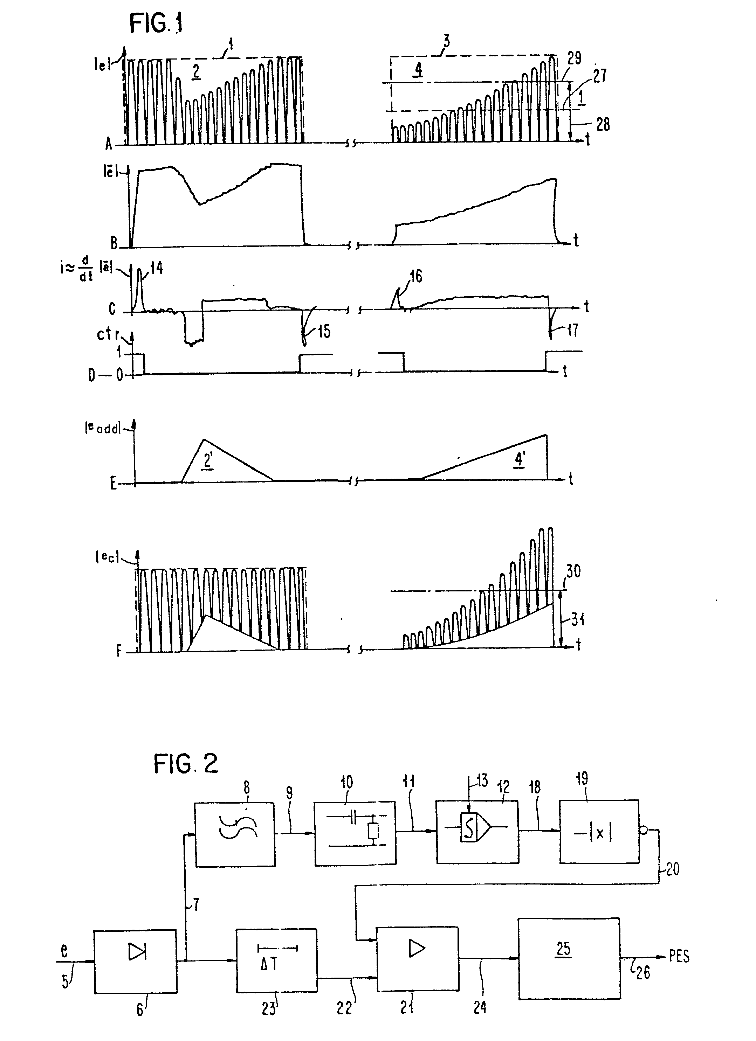

In Fig. 1 ist in Zeile A in der linken Hälfte ein Servosignal, das als Burstsignal bezichnet wird, dargestellt, in dessen Umhüllende 1 ein dreieckförmiger Einbruch 2 erfolgt. Die rechte Hälfte der Zeile A der Fig. 1 zeigt ein weiteres Beispiel eines Burstsignals mit einer Umhüllenden 3, die einen Signaleinbruch 4 dergestalt aufweist, daß das Signal gleich am Anfang nicht in voller Höhe der Umhüllenden 3 vorhanden ist. Dagegen ist das Signal im ersten Fall der linken Hälfte in Zeile A der Fig. 1 derart nur geschwächt, daß jeweils am Anfang und am Ende die volle Umhüllende vorhanden ist, das Signal jedoch zwischenzeitlich durch den dreieckförmigen Einbruch 2 geschwächt wird. Das in Fig. 1, Zeile A dargestellte Signal $|e|$ entsteht durch Zeiweg-Gleichrichtung oder Betragsbildung des Signals e, welches als Servosignal von dem Magnetkopf festgestellt und einer entsprechenden Schaltung, wie sie im Blockschaltbild in Fig. 2 dargestellt ist, zugeführt wird. Gemäß Fig. 2 wird dieses Signal e auf einer Eingangsleitung 5 einem Vollweg-Gleichrichter 6 zugeführt, an dessen Ausgang 7 das Signal $|e|$ ansteht.

Dieses gleichgerichtete Signal wird auf der Leitung 7 einem Glättungsfilter oder Tiefpaßfilter 8 zugeführt, welches die betroffenen Signale glättet und die die Umhüllenden 1 bzw. 3 der betreffenden Signale herausstellt. Damit entsteht auf der Ausgangsleitung 9 des Glättungsfilters 8 ein Signal $|\bar{e}|$, wie es in Zeile B der Fig. 1 für die beiden verschiedenen Fälle dargestellt ist. Dieses Signal auf Leitung 9 wird einem Differentiator oder Hochpaßfilter 10 zugeführt, an dessen Ausgang 1 das differenzierte, geglättete Signal

$$i \sim \frac{d}{dt} |\bar{e}|$$

ansteht, dessen Verlauf in Zeile C der Fig. 1 dargestellt ist.

Dieses differenzierte Signal auf Leitung 11, dessen Signalverlauf die Zeile C in Fig. 1 zeigt, wird nun einem Integrator 12 zugeführt, dessen Integrationszeitpunkt durch ein auf Leitung 13 zugeführtes Steuersignal ctr, welches in Zeile D der Fig. 1 dargestellt ist, gesteuert wird. Die Steuerung des Integrationszeitpunktes wird mit Hilfe des Signals ctr so vorgenommen, daß die im Signalverlauf der Zeile C auftretenden Spitzen 14, 15, 16 und 17 unterdrückt werden. Das Ergebnis des Integrationsvorganges des Integrators 12 steht auf der Ausgangsleitung 18 an und wird durch einen Absolutwertbildner 19 zu dem komplementären Signal $|e_{add}|$ geformt, welches auf der Ausgangsleitung 20 des Absolutwertbildners 19 ansteht und dessen Verlauf in Zeile E der Fig. 1 dargestellt ist.

Diese Zeile E zeigt die beiden unterschiedlichen Formen von komplementären Signalen 2' und 4', die dem eigentlichen Signal erfindungsgemäß hinzugefügt werden, um das korrigierte Signal $|e_c|$ zu erhalten, dessen Verlauf in Zeile F der Fig. 1 dargestellt ist. Dieses Signal in Zeile F wird dadurch erzielt, daß das Signal auf der Leitung 20 einem Summierverstärker 21 zugeführt wird. Diesem Summierverstärker 21 wird auf einer zweiten Eingangsleitung 22 das über ein Verzögerungsglied 23 mit der Laufzeit $\Delta T$ geführte Ausgangssignal der Leitung 7 des Gleichrichters 6 zugeführt. Mit dem Verzögerungssignal 23 soll erreicht werden, daß die Summation der beiden Signale auf den Leitungen 20 und 22 zu dem Zeitpunkt beginnt, zu dem dies beispielsweise insbesondere im Falle der linken Hälfte in Fig. 1 nötig ist. Das Ausgangssignal des Summierverstärkers 21 auf Leitung 24 wird der eigentlichen Auswerteschaltung 25 zugeführt, auf dessen Ausgangsleitung 26 das Positionsfehlersignal PES ansteht, mit dem z. B. ein nicht dargestellter Magnetkopf auf seiner Spur gehalten wird.

Wie die linke Hälfte der Fig. 1 zeigt, ist bei einem Signaleinbruch 2 dieser Art insgesamt erfindungsgemäß es möglich, das der Auswerteschaltung 25 zugeführte Signal wieder mit Hilfe des komplementären Signals 2' in Zeile E so auszugleichen, wie es in Zeile F der Fig. 1 dargestellt ist und somit der ursprünglichen, ungestörten Umhüllenden 1 aus der Zeile A der Fig. 1 entspricht. Bei dem zweiten Fall, der in der rechten Hälfte der Fig. 1 dargestellt ist, ist in Zeile A mit der gestrichelten Linie 27 und dem zugehörigen Pfeil 28 zwischen der Zeitlinie t und der Linie 27 der Durchschnitt angegeben, der diesem Signalwert entspricht. Mit 29 ist diejenige Linie gezeigt, die dem eigentlichen Durchschnittswert bei der ungestörten Umhüllenden 3, wenn also der Einbruch 4 fehlt, entsprechen würde. Dieser Wert wird in etwa wieder mit der Linie 30 und entsprechend dem Abstandspfeil 31 erreicht, wie es in Zeile F der Fig. 1 dargestellt ist. Bei diesem Beispiel ist zwar keine komplette Wiederherstellung des ursprünglichen Signals, auch in seiner Form, möglich, jedoch ist eine wesentliche Verminderung der Nachteile im folgenden dadurch vermieden, daß der Integralwert der Signals, d. h. dessen Energiegehalt, durch Addition des entsprechenden zugehörigen Zusatzsignals 4', das in Zeile E von Fig. 1 gezeigt ist, näherungsweise wieder auf den Stand zurückgeführt werden kann, den er ohne einen Einbruch 4 haben muß. Nachteilige Folgen auf das Positionsfehlersignal PES sind auf diese Weise auch in einem solchen Fall ausgeschlossen.

**Patentansprüche**

1. Verfahren zur Kompensation von Signaleinbrüchen (2, 4) in von magnetischen Aufzeichnungsträgern gelesenen Signalen, insbesondere Einbrüche in Lesesignale von Servosignalen zur Steuerung der Spurfolge von Magnetköpfen, dadurch gekennzeichnet, daß aus dem Einbruch (2, 4) in die Umhüllende (1, 3) des betreffenden Signals ein komplementäres Korrektursignal (2', 4') ermittelt und dem betroffenen Signal vor der weiteren Auswertung hinzuaddiert wird, derart daß das gelesene Signal (e) gleichgerichtet, die den Einbruch (2, 4) zeigende Umhüllende des Signals herausgefiltert und geglättet, dieses Signal ($\bar{e}$) differenziert und dann unter Berücksichtigung des Vorzeichens des differenzierten Signals integriert und der Absolutwert daraus gebildet und additiv dem gelesenen und gleichgerichteten Signal ($\bar{e}$) hinzugefügt wird, wobei die Integration des geglätteten und differenzierten Signals eng innerhalb der Grenzen eines dem differenzierten Signal entsprechenden Zeitbereiches erfolgt, so daß die am Anfang und Ende des differenzierten Signals auftretenden Spitzen (14–17) unterdrückt werden.

2. Vorrichtung zum Durchführen des Verfahrens nach Anspruch 1, dadurch gekennzeichnet, daß vorgesehen sind:

a) ein Vollweg-Gleichrichter (6), gegebenenfalls mit Verstärker, dem das vom magnetischen Aufzeichnungsträger gelesene Signal (e) eingangsseitig (5) zuführbar ist,

b) ein Tiefpaß-Glättungsfilter (8), welches das gelesenen und gleichgerichtete Signal glättet,

c) ein Differenzierglied (10), das nur die Änderung des gelesenen, gleichgerichteten und geglätteten Signals durchläßt,

d) ein gesteuertes Integrationsglied (12), dem das gelesene, gleichgerichtete, geglättete und differenzierte Signal zuführbar ist,

e) ein Absolutwertbildner (19) am Ausgang (18) des Integrationsglieds (12) zur Abgabe des komplementären Korrektursignals ($| e_{add} |$) und

f) ein Summierverstärker (21) zum Addieren des gelesenen und gleichgerichteten Signals ($| e |$) und des komplementären Korrektursignals ($| e_{add} |$), an dessen Ausgang (24) das korrigierte Signal ($| e_c |$) ansteht.

3. Vorrichtung nach Anspruch 2, dadurch gekennzeichnet, daß das gelesene und gleichgerichtete Signal ($| e |$) im direkten Zweig über ein vorgesehenes Verzögerungsglied (23) dem Summierverstärker (21) zugeführt wird, um die Laufzeitverzögerung im anderen Zweig bei der Ermittlung und Bildung des komplementären Korrektursignals ($| e_{add} |$) auszugleichen.

**Claims**

1. Method of compensating for amplitude decreases (2, 4) of signals read from magnetic record carriers, in particular amplitude decreases of servo signals for the track following control of magnetic heads, characterized in that from the amplitude decrease (2, 4) in the envelope (1, 3) of the respective signal a complementary correction signal (2', 4') is derived and added to the signal concerned before further evaluation such that the read signal (e) ist rectified, the envelope representative of the amplitude decrease of the signal filtered and smoothed, the signal ($\bar{e}$) differentiated and then integrated, taking account of the sign of the differentiated signal, and the absolute value derived therefrom and added to the read and rectified signal ($\bar{e}$), wherein integration of the smoothed and differentiated signal ist effected, closely observing the boundaries of a time range correponding to the differentiated signal, so that the peaks (14–17) occurring at the beginning and the end of the differentiated signal are suppressed.

2. Arrangement for implementing the method according to claim 1, comprising

a) a full-wave rectifier (6), if necessary, with an amplifier, to the input side (5) of which the signal (e) read from the magnetic record carrier ist applied,

b) a low-pass smoothing filter (8) smoothing the read and rectified signal,

c) a differentiating means (10) passing only the change of the read, rectified and smoothed signal,

d) a controlled integration means (12) to which the read, rectified, smoothed and differentiated signal is applied,

e) an absolute value generator (19) at the output (18) of the integration means (12) for emitting the complementary correction signal ($| e_{add} |$), and

f) a summing amplifier (21) for adding the read and rectified signal ($| e |$) and the complementary correction signal ($| e_{add} |$), at whose output (24) the corrected signal ($| e |$) is emitted.

3. Arrangement according to claim 2, characterized in that the read and rectified signal ($| e |$)

in the direct branch ist fed to the summing amplifier (21) via a delay element (23), in order to compensate for the delay in the other branch when determining and forming the complementary correction signal ($|e_{add}|$).

(23) à l'amplificateur de sommation (21), afin de compenser le retard de transmission dans l'autre dérivation lars de l'obtention et de la formation du signal de correction complémentaire ($|e_{add}|$).

## Revendications

1. Procédé pour une compensation de coupures de signaux (2, 4) dans des signaux lus sur des supports d'enregistrement magnétiques, notamment des coupures dans la lecture de servo-signaux pour la commande du suivi de piste par de têtes magnétiques, caractérisé en ce que, à partir de la coupure (2, 4) dans l'enveloppe (1, 3) du signal correspondant, un signal de correction complémentaire (2', 4') est produit et est ajouté au signal correpondant avant une autre évaluation, de telle sorte que le signal lu (e) soit redressé, que l'enveloppe du signal présentant la coupure (2, 4) soit filtrée et lissée, que ce signal ($\bar{e}$) soit différencié puis soit intégré, en tenant compte du signe du signal différencié, et que la valeur absolue correspondante soit établie et soit incorporée par addition au signal lu et redressé ($\bar{e}$), l'integration du signal filtré et différencié étant effectuée en restant étroitement à l'intérieur des limites d'une plage de temps correpondant au signal différencié afin d'éliminer les crêtes (14, 17) se produisant au début et à la fin du signal différencié.

2. Dispositif pour la mise en oeuvre du procédé selon la revendication 1, caractérisé en ce qu'il est prévu:

a) un redresseur en double alternance (6), associé le cas échéant avec un amplificateur et auquel peut être appliqué à l'entrée (5) le signal (e) lu sur le support d'enregistrement magnétique,

b) un filtre passe-bas de lissage (8), que filtre le signal lu et redressé,

c) un organe de différenciation (10), que laisse passer seulement la modification du signal lu, redressé et filtré,

d) un organe d'integration commandé (12), auquel peut être applique le signal lu, redressé, filtré et différencié,

e) un formateur de valeur absolue (19) placé à la sortie (18) de l'organe d'intégration (12) pour fournir le signal de correction complémentaire ($|e_{add}|$), et

f) un amplificateur de sommation (21) pour additionner le signal lu et redressé ($|e|$) et le signal de correction complémentaire ($|e_{add}|$), et à la sortie (24) duquel apparaît le signal corrigé ($|e|$).

3. Dispositif selon la revendication 2, caractérisé en ce que le signal lu et redressé ($|e|$) est appliqué dans une dérivations directe par l'intermédiaire d'un organe de temporisation prévu

# FIG.1

# FIG. 2